# EUROPEAN PATENT APPLICATION

(11) **EP 1 267 542 A1**
(43) Date of publication of application: **18.12.2002**
(21) Application number: 01114213.0
(22) Date of filing: 12.06.2001
(51) Int. Cl.: H04L 29/06

(54) **Method for communication between a client application and a server through a proxy-server**

(71) Applicant: TELEFONAKTIEBOLAGET L M ERICSSON (publ), 126 25 Stockholm (SE)
(72) Inventor: Schaffrath, Daniel, D-52064 Aachen (DE)
(74) Representative: Tonscheidt, Andreas

(57) **Abstract**

In a method for an improved data transmission between a user equipment (UE) and a server (S) according to a transmission protocol with messages, the user equipment (UE) is adapted to a first version of said protocol and the server (S) is adapted to a second version of said protocol. A connection for the data transmission is performed over a proxy server (PS) which analyzes the protocol version of a first message sent between the user equipment (UE) and the server (S) and stores an identification of the corresponding connection. The proxy server (PS) waits for a reply message corresponding to the identified connection and analyzes the protocol version of the reply message. The reply message or further messages corresponding to the connection are handled according to the analyses. Devices and software programs embodying the invention are also described.

## Description

### Technical field of the invention

The present invention relates to a method according to the preamble of claim 1. Devices and software programs embodying the invention are also described.

### Background of the invention

The protocol used for browsing the Word Wide Web is HTTP, mainly HTTP/1.0 as described in Request for Comments (RFC) 1945 of the Internet Engineering Task Force (IETF) and HTTP/1.1 as described in RFC 2616. HTTP is based on a simple request and reply scheme.

The browsing is performed by a user agent which is a program executed on a user equipment, e.g. a wireless terminal, of an end-user to browse the world wide web (WWW). The user agent contacts for this purpose a web server which is in this context an application executed on a computer or group of computers which services requests by sending replies. A request or reply according to the HTTP protocol consists of a start-line, zero or more header-fields, an empty line to indicate the end of the header and an optional body.

For requests the start-line begins with a method token, followed by an URI (Uniform Resource Identifier) and the HTTP version. An example of a method token is a GET command, i.e. a request by the user agent to get the resource identified by this URI. Basically this initiates a simple file transfer. Headers in a request can contain for example information about the user's preferences (e.g. Accept-Language for the definition of image parameters and character sets), conditions on the request (e.g. If-Modified-Since) or an authorization.

For replies the start-line consists of the protocol version, followed by numeric status code and a human readable, textual phrase explaining the numeric code. This status code describes whether the request was successful or not, or what further steps need to be done to proceed. The header in a reply can provide also information about the content type and content encoding of the body, that the server accepts certain parameters, e.g. a ranges defining sections of a resource, or it can state that the web server or next proxy is going to close the connection.

Usually the user agent sends a request without a body for a resource identified by an URI over a transmission channel for instance a TCP/IP connection and waits for the reply by the web server or next proxy. A proxy as defined in RFC 1945 is an intermediate program which acts as both a server and a client for the purpose of making requests on behalf of other clients. Requests are serviced internally or by passing them, with possible translation between different protocols, on to other servers. A proxy must interpret and, if necessary, rewrite a request message before forwarding it. Proxies are often used as client-side portals through network firewalls and as helper applications for handling requests via protocols not implemented by the user agent.

In HTTP/1.0 the connection is closed when the transmission is finished. This pattern is repeated for every resource, i.e. any data object or service which is identified by a URI. Since nowadays web pages consist of many resources, this can happen a considerable number of times during a download of a web page. The close of the connection is a major drawback because it takes time, processing capacity and signaling to establish a new connection.

In HTTP/1.1 according to RFC 2616 an important new feature is that it is possible to keep connections persistent meaning that one connection can be used to transfer several resources. Another new feature is pipelining which enables user agents to send out several requests in a row without having to wait for the first resource to be transferred fully. When the user agent is pipelining the web server or next proxy must send the resource exactly in the order in which they were requested by the user agent.

A problem due to the historical evolution of the Word Wide Web is that there are a number of web servers and proxies that are not adapted to new versions of protocols, e.g. HTTP. Although basic functions are generally compatible, i.e. a request according to a new version can be processed by a server adapted to an older one if it comprises only commands according to the older version, additional features introduced with the new version can not be interpreted and fulfilled by the server. Thus a client adapted to a new protocol version does not benefit from the new features when communicating with a web server or proxy adapted to a previous version. This is especially disadvantageous if the connection between client and server is slow or has a high round-trip-time like Modem-, ISDN-, GSM (Global System for Mobile Communication) or GPRS (General Packet Radio Service) links.

Another problem is that HTTP/1.1 compliant web servers or proxies often do not use persistent connections or other features of HTTP/1.1 to the full extent. For instance squid, a widely spread caching proxy, i.e. a proxy which can store the reply for a request and serve further requests for the same content by the stored version, terminates the connection if it fulfilled a conditional request for a resource which did not change compared to the cached version. Therefore, only a limited range of protocol features may be used in a connection, e.g. to reduce the processing load in the server or due to programming errors, even if the user agent and the server are adapted to the same protocol version and this version allows additional features.

For the improvement of wireless transmissions with a low bandwidth in GSM, filter proxies have been proposed as described for example in "c't magazin für computer technik", issue 8/1999, Verlag Heinz Heise, Hannover, Germany. The filter proxy compresses and optionally removes content from web pages on the air interface between the user equipment and the server which are then decompressed again in the user equipment. However, the described proxy does not solve the above problems and does not exploit the advantages provided by protocol improvements.

### Summary of the invention

It is an object of the present invention to obviate the above disadvantages and allow an improved exploitation of protocol improvements in the transmission between a user equipment and a server.

According to the invention, the method described in claim 1 is performed. Furthermore, the invention is embodied in a device and a software program as described in claims 12 and 15, respectively. Advantageous embodiments are described in the further claims.

In the proposed method, messages are sent between a user equipment and a server according to a transmission protocol i.e. either to or from the user equipment. The user equipment, i.e. a user agent executed on the user equipment, is adapted to a first version of said protocol and the server is adapted to a second version of said protocol. Both versions may either be identical or different. If both are different, the versions are compatible, i.e. both the higher and the lower version can be processed by both entities and any entity sends messages in the version to which it is adapted. However, functionality which is only part of the higher version is not performed by an entity according to a lower version.

The data transmission according to the invention is performed over a proxy server, i.e. the proxy server analyzes and forwards the messages. The proxy server analyzes the protocol version of a first message sent between the user equipment and the server either during or after forwarding it. An identification of the corresponding connection is stored in a memory with the result of the analysis. The analysis includes preferably not only an identification of a protocol version but also of the used features of this version.

The proxy server waits for a reply message corresponding to the identified connection. The proxy server then analyzes the protocol version of the reply message and performs a comparison of the versions of the first message and the reply message. The comparison can for example be performed on the basis of the protocol versions indicated in the message header. More advantageous is a check which functionality is allowed or used in the reply and request, e.g. indicated by options in header fields. This avoids erroneous results if the indicated version is wrong or if an entity allows only to use parts of the functionality of a protocol version. It is possible that the proxy server receives additional requests from the source of the first message before the reply. In this case, they are also forwarded.

According to the analyses, the proxy server handles the reply message or further messages corresponding to the connection. Especially, the allowed functionality can be compared and header fields can be changed to adapt the functionality before forwarding of a message. Furthermore, the proxy server can check whether messages need to be re-sent because the target entity is not adapted to the processing, e.g. not adapted to pipelining. In addition, a reconnection can be performed to allow the sending of further messages with minimum delay if the closing of a connection is detected in one analysis while the connection should remain open according to the other analysis.

The proposed method enables the user agent to use the features of an improved protocol version, e.g. a higher version of HTTP. This allows a reduction of the amount of data to be transferred which in turn causes the load time to be decreased or for volume-billing services the costs. The amount of signaling and processing capacity for the establishment of connections can also be decreased. The application of the proposed method is also advantageous if user agent and server are adapted to the same protocol version but only partly use the features of the version.

In a preferable embodiment, the proxy server converts the protocol version of the reply message or the protocol version of further messages corresponding to the connection according to the analyses. For example, if the protocol version of the reply message is lower, the proxy server can convert the protocol version of the reply message to the protocol version of the first message before forwarding it. If the protocol version of the reply message is higher, the protocol version of any further messages from the source of the first message, i.e. corresponding to the connection, can be converted to the higher protocol version. The conversion of the versions comprises for example the rewriting of the header, e.g. the removal or amendment of those header fields which are new in HTTP/1.1 compared to HTTP/1.0 in a downgrading or upgrading between these protocol versions, respectively. It allows an optimal exploitation of the features offered by the versions.

In a further preferable embodiment, the proxy server upgrades the protocol version of the first message to the highest version available to the proxy server. In this way, the proxy server can check whether the server is adapted to the full range of functionality of the proxy server.

An advantageous proxy server comprises at least one buffer for storing messages. This allows a fast retransmission for messages for which an appropriate result is not received, either due to a transmission error or because the protocol version of the receiving entity is not adapted to the processing.

Preferably, the proxy server analyzes a message header for an information whether a connection is closed and establishes the connection again, especially if a check indicates that a buffer corresponding to the connection stores messages which are not sent yet. In this way, the stored messages can be sent with minimum delay. Preferably, the information is not forwarded on a connection to a further entity to avoid that this connection is also closed. This reduces the delays and signaling in the transmission.

In an advantageous embodiment of the method, the reply message is checked for information which is not requested in the first message and said information is removed from the reply message. For example, the user may request only a limited range from a web page while the server does not consider range requests. In this case, the information not requested can be removed from the message body to reduce the message size.

Preferably, the content of a message is compressed or decompressed in the proxy server according to the analyses. In this way, scarce transmission capacity on a link can be saved even if the transmission to the proxy server was performed without compression. A compression is especially advantageous for wireless links but it can also be performed for the transmission through a core network. It is also possible that the type of compression is changed and/or adapted to different types of links.

Preferably, redundant information is removed from a message, e.g. a request or a reply, to reduce the message size for transmission. For example, message headers sometimes comprise redundant information.

A server according to the proposed method is not necessarily the content provider but can also be a further proxy in the data transmission which proxy forwards data from a further server, i.e. either a still further proxy or the content provider. In this case both the content provider and the user equipment may be adapted to a higher protocol version while at least one further proxy in the data transmission is only adapted to a lower version. The proposed method avoids a degradation of the transmission parameters by the further proxy.

The proposed method is especially advantageous if the transmission protocol is the HTTP protocol but not limited to this protocol.

The proposed method is particularly beneficial if at least one connection is performed on a link with high round trip time or with low data rate or both. At least one these conditions is for example fulfilled in the case of wireless connections, e.g. in a GSM or GPRS system. The method is also advantageous for a UMTS (Universal Mobile Telecommunication System) radio access system. The method is especially proposed if a connection adjacent to the user equipment, e.g. a wireless link to a mobile terminal on which the user agent is executed, has a high round trip time.

A proxy server according to the invention allows an improved data transmission between a user equipment and a further server according to a transmission protocol with messages. The proxy server is provided with a processing system adapted to analyze messages according to the protocol and with interfaces over which a connection for the data transmission is performed. The processing system analyzes a protocol version of a first message sent between the user equipment and the further server and stores an identification of the corresponding connection and the result of the analysis in a memory. The processing system analyzes reply messages whether their identity corresponds to the stored identification. The processing system furthermore analyzes the protocol version of the reply message which corresponds to the stored identification. The processing system handles the reply message or further messages corresponding to the connection according to the analyses. It can for example convert the protocol version of the reply message, e.g. to the protocol version of the first message, or the protocol version of further messages corresponding to the connection according to a comparison of the analyses. The proxy server is preferably adapted to perform any of the described methods.

Preferably, the proxy server is located in an access network of a wireless transmission system, e.g. implemented in or connected to a radio base station, a base station controller or a radio network controller.

A program unit according to the invention is for example stored on a data carrier or loadable into a proxy server, e.g. as a sequence of signals. It can perform any embodiments of the method described.

The foregoing and other objects, features and advantages of the present invention will become more apparent in the following detailed description of preferred embodiments as illustrated in the accompanying drawings.

### Brief description of the drawings

- Fig. 1: shows a schematic representation of a data transmission between a user equipment and a server
- Fig. 2: shows a flow diagram of a method according to the invention
- Fig. 3: shows with a connection including several proxies
- Fig. 4: shows a message sequence in a method according to the invention

### Detailed description of preferred embodiments of the invention

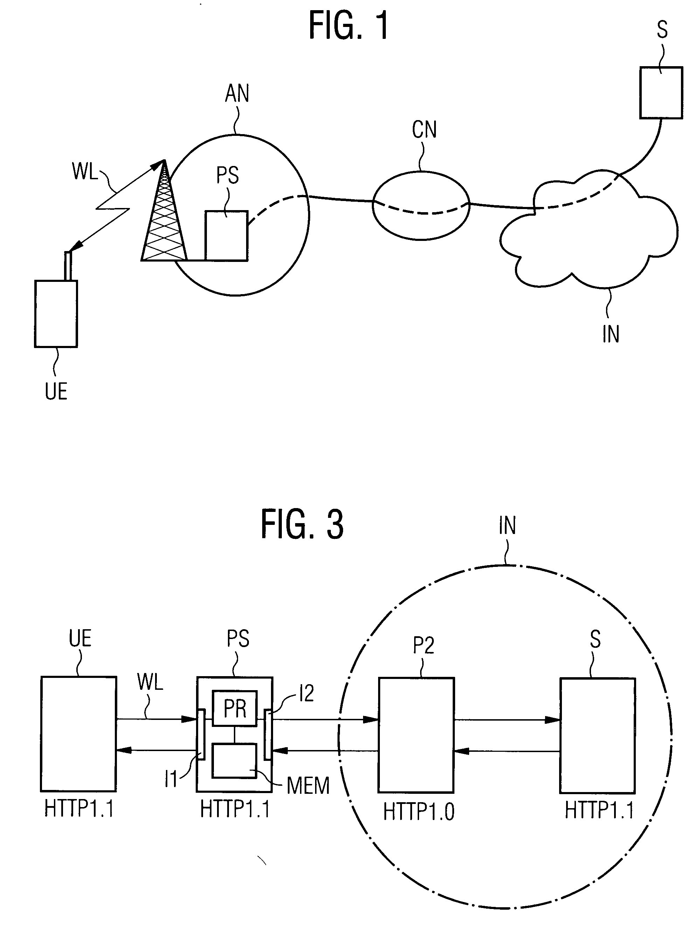

Figure 1 depicts an example of a data transmission between a user equipment UE, e.g. a mobile terminal, with a processing system in which a user agent is executed and a server S. The data transmission is performed according to a specified protocol, e.g. HTTP. The route for the data transmission comprises several connections including a wireless link WL between the user equipment UE and a radio base station of an access network AN. Further connections in the data transmission are established via a core network CN of a communication system, e.g. a GSM or UMTS system, and the Internet IN to which the server S in the example is connected. The described connections can either be packet switched or circuit switched.

In the indicated networks AN, CN, IN or in other networks over which the data transmission may be established, a plurality of further servers performs the forwarding of the data sent between the user equipment UE and the server S. In addition, proxy servers may be present, e.g. at the borders of or within the networks. Due to the high number and different operators, it is generally not possible or practical that all servers processing the connection are upgraded when an improved version of the transmission protocol is available. Therefore, the connection is often established via further servers with different capabilities. Also, the protocol versions used by the server S and the user equipment UE may differ or one of the entities may not use all features of a protocol version, e.g. to save processing capacity in case of a high load. This is particularly disadvantageous if the user equipment UE is adapted to a new protocol version which allows an efficient data transmission over the wireless link WL because radio resources, e.g. bandwidth, are scarce and expensive.

A solution for this problem is the proposed method which is especially advantageous for the HTTP protocol. A central idea of the solution is to introduce a protocol boosting proxy server PS between user agent and web server. Preferably the proxy server PS is located close to the user agent, e.g. in the access network AN, for example in a radio base station or in a radio network controller providing a wireless link to the user equipment. Almost every customary user agent supports a proxy which fulfils the retrieval of resources from web servers upon their request. The proposed protocol boosting proxy server PS supports the full range of protocol features according to the latest protocol version. Thus a fully featured user agent can use all its features regardless of what features the target web server or next proxy are capable of. Furthermore the protocol boosting proxy tries to use as many features as possible when communicating with a web server or other proxy in order to be as efficient as possible.

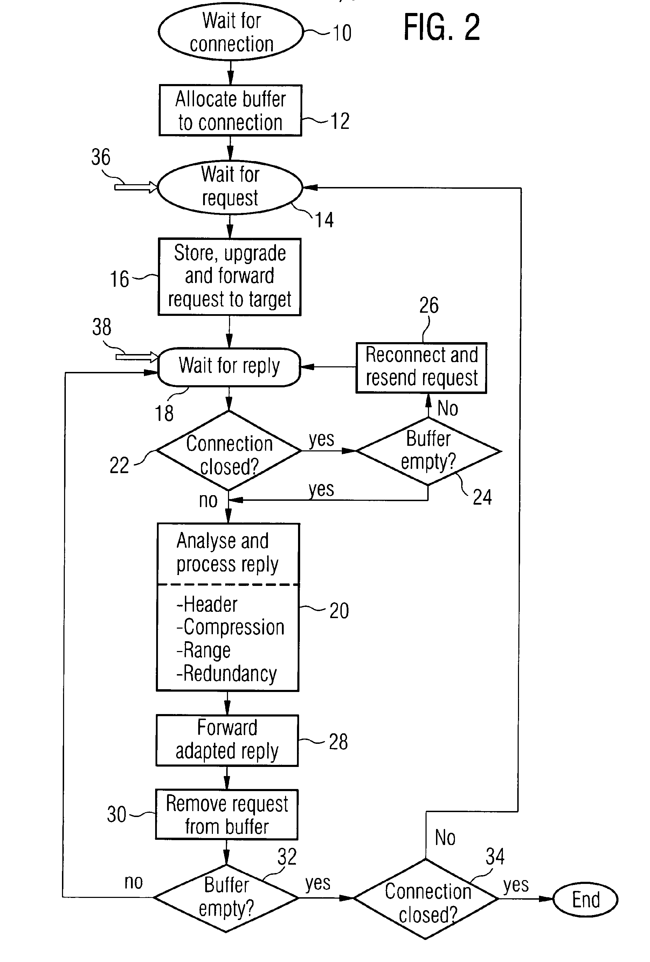

The proposed protocol boosting proxy server PS comprises preferably two main parts which are a request analyzer and a reply analyzer. An embodiment for the processing of a data transmission according to the proposed method is described in with respect to the flow chart in figure 2.

In a first step 10, the request analyzer waits for user agents to connect, for instance over a TCP/IP connection. Upon a connection it allocates a FIFO (first in, first out) buffer for this connection in step 12 which buffer stores the requests coming from the user agent. After requests are received in step 14, they are upgraded to the highest protocol version available to the protocol boosting proxy and the upgraded version is forwarded to the next proxy or target web server (step 16). The requests are preferably kept for later usage. This allows to re-send the requests if the next proxy or target web server does not support pipelining but the user agents wants to pipeline.

A reply corresponding to the request arrives after a waiting step 18. In the following analysis and conversion procedure 20, a plurality of steps can be performed as described in the following. It is possible that only one or some of these steps are performed. Particularly, the reply analyzer converts, e.g. downgrades, the reply in procedure 20 and the reply header to the highest HTTP version to which the user agent is adapted.

Although check 22 is indicated separately in figure 2, it can also be a part of procedure 20. The reply analyzer examines the reply header in check 22 if the next proxy or target web server will close the connection. In this case the protocol boosting proxy removes this header field in analysis and conversion procedure 20 to ensure that the user agent regards the connection as persistent. Furthermore, a second check 24 is performed whether there is any request left in the FIFO buffer. The web server or next proxy will not fulfil these requests after it closed the connection. Therefore the protocol boosting proxy reconnects to the next proxy or web server to re-send the first request from the FIFO buffer in step 26. Only the first request is re-sent in step 26 because, due to the closing of the previous connection, the protocol boosting proxy is aware that the web server or next proxy does not support pipelining. The corresponding reply is then sent back over the existing connection to the user agent. For any further requests in the FIFO buffer, the protocol boosting proxy proceeds in the same way by creating a new connection to the server, resending the request, processing the reply and forwarding it to the user agent.

Before the reply is sent to the user agent in step 28, the protocol boosting proxy can optionally check in procedure 20, whether the body of the reply of the web server or next proxy was compressed. In case it was not and a request header from the user agent states that it is supporting a compression which the protocol boosting proxy also supports, the proxy applies the appropriate compression to the body. In this way, a reduced amount of data, i.e. number of bytes, can be transferred to the user agent. If the protocol boosting proxy is already aware of the link characteristic, e.g. due to a measurement of a data rate or round trip time or due to implementation, this decision might be cancelled in a check of the link characteristic. The advantage of this embodiment is that if the link is fast, the latency which is introduced by the compression may be longer than the time saved by transferring the compressed body.

In a further option, the protocol boosting proxy checks in procedure 20 whether the user agent sent a range request and the web server or next proxy fulfilled it, i.e. sent only the requested range and not the whole object. In case the whole object was sent to the protocol boosting proxy, it preferably converts this reply in procedure 20 into a partial reply by stripping off sections, i.e. bytes of the body which were not requested by the user agent. In this way, the amount of data can be reduced without introducing latency.

Furthermore, the amount of transferred data can be reduced if the protocol boosting proxy removes redundant header fields in procedure 20 which are sent by some servers, for instance "Content-Encoding: identity", i.e. no coding is used.

After this processing is finished and the adapted request forwarded, the stored request is not needed anymore and removed from the FIFO buffer in step 30. Further checks 32, 34 are performed whether the buffer is empty and the connection is closed to determine whether the method should proceed either to a further waiting step 14, 18 for a request or reply or whether it should be ended. It should be understood that requests or reply may be received by the protocol boosting proxy at any time during the method as indicated by the arrows 36, 38 pointing to steps 14 and 18. Several messages can be processed in parallel, e.g. a request may be re-sent in step 26 while a reply is processed in procedure 20. Finally, a skilled person is aware that a user agent may have several connections to the same or different servers simultaneously.

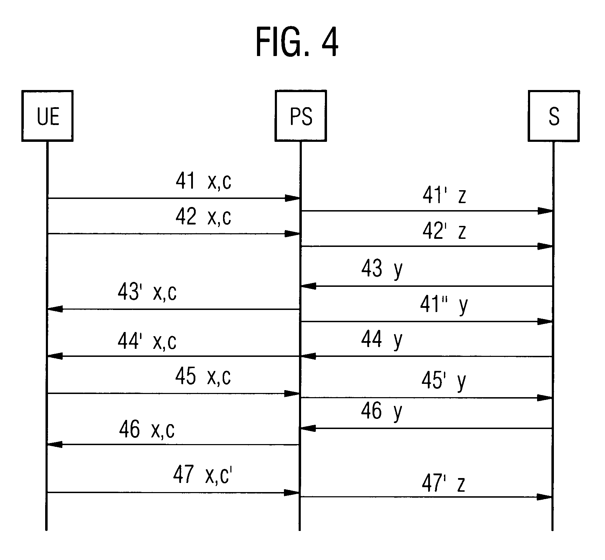

Figure 3 shows a data transmission between a user equipment UE and a server S in which connections are established to a proxy server PS according to the invention and a further proxy server P2, e.g. a caching server in the Internet IN. While all other entities in the data transmission are adapted to a new protocol version HTTP/1.1, the further proxy server P2 is adapted only to an older version HTTP/1.0. Although the user agent in the user equipment UE and the server S are both adapted to a protocol version which allows an efficient use of radio resources on the wireless link WL, this version can not be used in the state of the art because the further server sends only messages according to HTTP/1.0. The proxy server PS of the invention upgrades the messages sent by the further proxy server P2 back to protocol version HTTP/1.1 allowing an improved use of the wireless link WL.

To perform the described processing, the proxy server is provided with a processing system PR which is adapted to analyze and convert messages received and sent over the interfaces 11, 12 to the user equipment and the further proxy server P2, respectively. A memory MEM allows to store messages, e.g. to re-send them if no appropriate reply is received. Although omitted for clarity in the drawing, a skilled person is aware that the other entities in the data transmission are also equipped with processing systems and interfaces.

In figure 4, a message sequence in a method according to the invention is depicted. In this example, a user equipment UE is adapted to version x of the message protocol while the proxy server PS is adapted to a version z and the server S to an older version y. Versions x and z allow a pipelining of messages while version y does not. For example, versions x and z can be HTTP/1.1 while version y can be HTTP/1.0.

The user agent on the user equipment sends two requests 41, 42 for resources according to protocol x on a connection c. The proxy server analyzes message 41 and stores that protocol version x is used on connection c to the user agent on user equipment UE. The proxy server performs a conversion of both messages to version z being the highest one to which it is adapted, stores them and forwards them as requests 41', 42' to the server S. The server S sends a reply 43 according to version y upon request 41' while request 42' is not processed as version y allows no pipelining. The proxy server receives reply 43 and analyzes that the connection corresponds to version y and stores this information. According to the information stored for the connection c to the user equipment UE, the proxy server PS converts message 43 to version x before forwarding it as message 43' to the user equipment.

In addition, the proxy server PS is aware from the analysis of reply 43 that request 41 was not processed as protocol version y allows no pipelining. Therefore, the request is re-sent according to version y as request 42". The reply 44, 44' to this request as well as any further messages 45, 45', 46, 46' on the same connections are sent according to protocol x between user equipment UE and proxy server PS and according to protocol y between proxy server PS and server S with the proxy server PS performing the conversion. If, however, a parallel connection c' is set up from the user agent to the server S, this will generally be treated as a new connection and a request 47 is therefore again forwarded as request 47' according to protocol z until a corresponding response is received on connection c'.

The above embodiments admirably achieve the objects of the invention. However, it will be appreciated that departures can be made by those skilled in the art without departing from the scope of the invention which is limited only by the claims.

## Claims

1. Method for an improved data transmission between a user equipment (UE) and a server (S) according to a transmission protocol with messages, wherein the user equipment (UE) is adapted to a first version of said protocol and the server (S) is adapted to a second version of said protocol, and wherein a connection for the data transmission is performed over a proxy server (PS), **characterized in that**
the proxy server (PS) analyzes the protocol version of a first message sent between the user equipment (UE) and the server (S) and stores an identification of the corresponding connection,
the proxy server (PS) waits for a reply message corresponding to the identified connection,
the proxy server (PS) analyzes the protocol version of the reply message, and the proxy server (PS) handles the reply message or further messages corresponding to the connection according to the analyses.

2. Method according to claim 1, wherein the proxy server (PS) converts the protocol version of the reply message or the protocol version of further messages corresponding to the connection according to the analyses.

3. Method according to claim 1 or 2, wherein the proxy server (PS) upgrades the protocol version of the first message to the highest version available to the proxy server.

4. Method according to any preceding claim, wherein the proxy server (PS) comprises at least one buffer for storing messages.

5. Method according to any preceding claim, wherein the proxy server (PS) analyzes a message header for an information whether a connection is closed and establishes said connection again.

6. Method according to any preceding claim, wherein the reply message is checked for information which is not requested in the first message and wherein said information is removed from the reply message.

7. Method according to any preceding claim, wherein the content of at least one of the messages is compressed or decompressed according to the comparison of the analyses.

8. Method according to any preceding claim, wherein redundant information is removed from at least one of the messages.

9. Method according to any preceding claim, wherein the server (S) is a proxy forwarding data from a further server.

10. Method according to any preceding claim, wherein the transmission protocol is the HTTP protocol.

11. Method according to any preceding claim, wherein at least one connection is performed on a link with high round trip time or low data rate.

12. Proxy server for an improved data transmission between a user equipment (UE) and a further server (S) according to a transmission protocol with messages, wherein the proxy server (PS) is provided with a processing system adapted to analyze messages according to the protocol, and wherein the proxy server (PS) is provided with interfaces over which a connection for the data transmission is performed, **characterized in that** the processing system analyzes a protocol version of a first message sent between the user equipment (UE) and the further server (S) and stores an identification of the corresponding connection in a memory,
the processing system analyzes reply messages whether their identity corresponds to a stored identification,
the processing system analyzes the protocol version of a reply message which corresponds to the stored identification,
and the processing system handles the reply message or further messages corresponding to the connection according to the analyses.

13. Proxy server according to claim 12, wherein the proxy server (PS) is located in an access network (AN) of a wireless transmission system.

14. Proxy server according to claim 12 or 13, wherein the proxy server (PS) is adapted to perform a method according to any of the claims 1 to 11.

15. Program unit comprising code for performing the steps of a method according to any of the claims 1 to 11.
